# EUROPÄISCHE PATENTANMELDUNG

(11) **EP 0 758 005 A1**
(43) Veröffentlichungstag der Anmeldung: **12.02.1997**
(21) Anmeldenummer: 96810437.2
(22) Anmeldetag: 02.07.1996
(51) Int. Cl.: C09B 67/22, C09B 1/467

(54) **Küpenfarbstoffmischungen, Verfahren zu ihrer Herstellung und ihre Verwendung zum Färben von cellulosehaltigen Fasermaterialien**

(30) Priorität: 10.07.1995 CH 2006/95; 08.02.1996 CH 325/96
(71) Anmelder: Ciba SC Holding AG, 4057 Basel (CH)
(72) Erfinder: Leupin, Peter, Dr., 4123 Allschwil (CH); Zoelper, Roland, 4052 Basel (CH)

(57) **Zusammenfassung**

Es werden Küpenfarbstoffmischungen enthaltend mindestens zwei strukturell unterschiedliche Farbstoffe, die der Formel 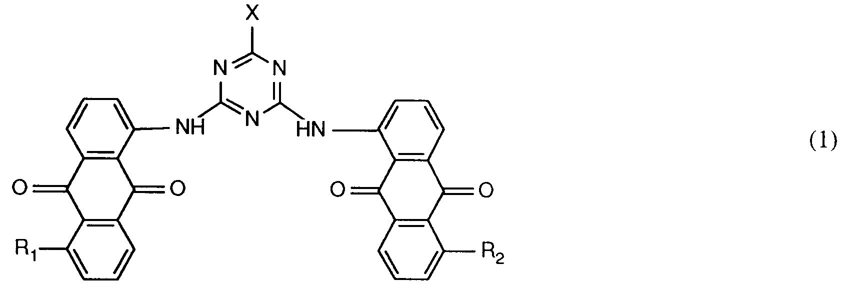
entsprechen, worin
X unsubstituiertes oder durch C₁-C₄-Alkyl, C₁-C₄-Alkoxy oder Halogen substituiertes Phenyl; Morpholino; oder der Rest -SR₃ ist;
R₁ und R₂ unabhängig voneinander je Wasserstoff oder der Rest -NHCO-C₆H₅ sind, und
R₃ C₁-C₄-Alkyl oder unsubstituiertes oder durch C₁-C₄-Alkyl oder Halogen substituiertes Phenyl ist, beschrieben, die sich zum Färben von cellulosehaltigen Fasermaterialien eignen und Färbungen mit guten Allgemeinechtheiten geben.

## Beschreibung

Gegenstand der vorliegenden Erfindung sind Küpenfarbstoffmischungen, Verfahren zu ihrer Herstellung und ihre Verwendung zum Färben von cellulosehaltigen Fasermaterialien.

Küpenfarbstoffe und ihre Verwendung zum Färben von cellulosehaltigen Fasermaterialien sind seit langem bekannt. Vielfach erfüllen die bestehenden Küpenfarbstoffe und Küpenfarbstoffmischungen aber nicht vollumfänglich die in letzter Zeit gesteigerten Anforderungen, vor allem bezüglich einer breiteren Nuancenpalette.

Die Aufgabe dieser Erfindung war deshalb, neue Küpenfarbstoffmischungen bereitzustellen, welche den heutigen Anforderungen gerecht werden.

Es hat sich gezeigt, dass mit den erfindungsgemässen Küpenfarbstoffmischungen diese Aufgabe gelöst werden kann.

Gegenstand der vorliegenden Anmeldung ist somit eine Küpenfarbstoffmischung enthaltend mindestens zwei strukturell unterschiedliche Farbstoffe, die jeweils der Formel 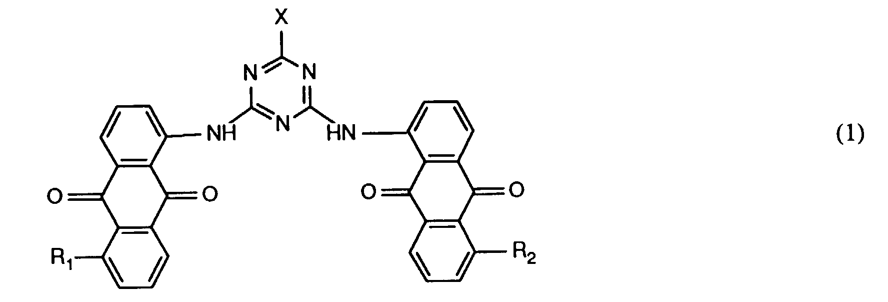
entsprechen, worin
X unsubstituiertes oder durch C₁-C₄-Alkyl, C₁-C₄-Alkoxy oder Halogen substituiertes Phenyl; Morpholino; oder der Rest -SR₃ ist;
R₁ und R₂ unabhängig voneinander je Wasserstoff oder der Rest -NHCO-C₆H₅ sind, und R₃ C₁-C₄-Alkyl oder unsubstituiertes oder durch C₁-C₄-Alkyl oder Halogen substituiertes Phenyl ist.

In der Formel (1) bedeutet C₁-C₄-Alkyl Methyl, Ethyl, n-Propyl, Isopropyl, n-Butyl, Isobutyl, sek.Butyl oder tert.Butyl.

In der Formel (1) bedeutet C₁-C₄-Alkoxy Methoxy, Ethoxy, Propoxy, Isopropoxy, n-Butoxy, Isobutoxy, sek.Butoxy oder tert.Butoxy.

In der Formel (1) bedeutet Halogen z.B. Chlor, Brom oder Jod.

X bedeutet vorzugsweise unsubstituiertes Phenyl oder Morpholino.

Wichtig sind Küpenfarbstoffmischungen enthaltend einen Farbstoff der Formel (1), worin X unsubstituiertes oder durch C₁-C₄-Alkyl, C₁-C₄-Alkoxy oder Halogen substituiertes Phenyl; R₁ Wasserstoff und R₂ der Rest -NHCO-C₆H₅ sind, und einen Farbstoff der Formel (1), worin X unsubstituiertes oder durch C₁-C₄-Alkyl, C₁-C₄-Alkoxy oder Halogen substituiertes Phenyl; und R₁ und R₂ je der Rest -NHCO-C₆H₅ sind.

Bevorzugt sind Küpenfarbstoffmischungen enthaltend den Farbstoff der Formel 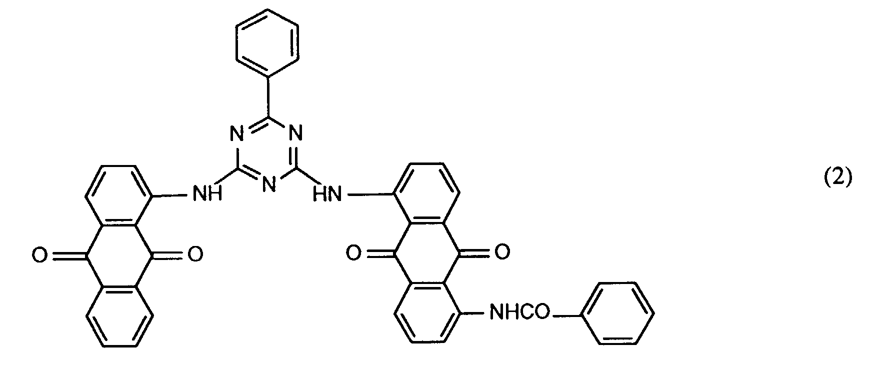 und den Farbstoff der Formel 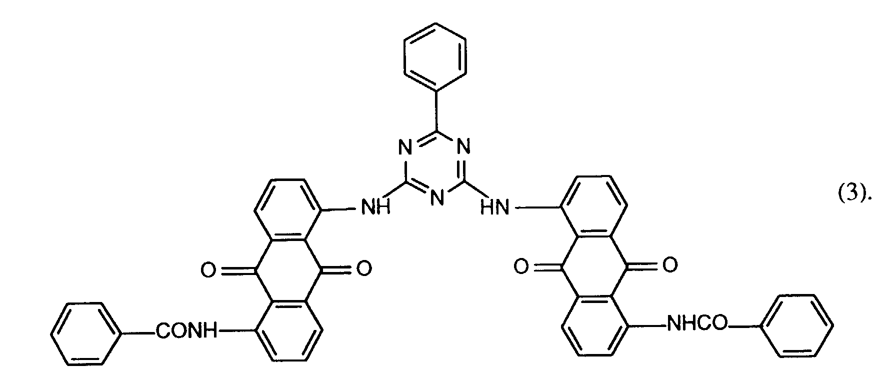 Ebenfalls bevorzugt sind Küpenfarbstoffmischungen enthaltend den Farbstoff der Formel 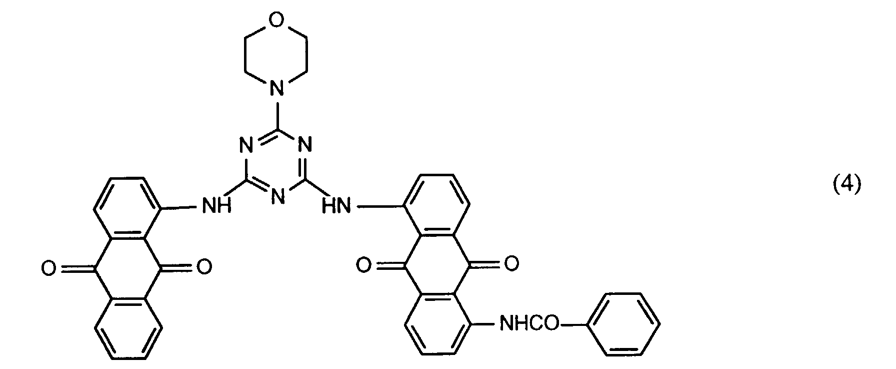 und den Farbstoff der Formel 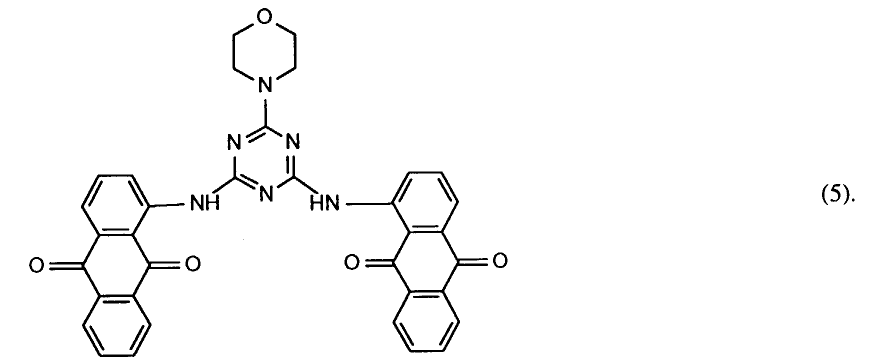 Besonders bevorzugt sind Küpenfarbstoffmischungen enthaltend 10 bis 90 Gew.-% des Küpenfarbstoffes der Formel (2) und 90 bis 10 Gew.-% des Küpenfarbstoffes der Formel (3).

Ebenfalls besonders bevorzugt sind Küpenfarbstoffmischungen enthaltend 10 bis 90 Gew.-% des Küpenfarbstoffes der Formel (4) und 90 bis 10 Gew.-% des Küpenfarbstoffes der Formel (5).

Ganz besonders bevorzugt ist die Küpenfarbstoffmischung enthaltend 70 Gew.-% des Küpenfarbstoffes der Formel (2) und 30 Gew.-% des Küpenfarbstoffes der Formel (3).

Ebenfalls ganz besonders bevorzugt ist die Küpenfarbstoffmischung enthaltend 60 Gew.-% des Küpenfarbstoffes der Formel (4) und 40 Gew.-% des Küpenfarbstoffes der Formel (5).

Die Farbstoffe der Formeln (2) bis (5) sind bekannt oder können nach bekannten Methoden hergestellt werden.
Die Herstellung der erfindungsgemässen Küpenfarbstoffmischungen erfolgt aus bekannten Ausgangsprodukten nach bekannten Methoden, z.B. indem man 2-Phenyl-4,6-dichlortriazin mit 1-Aminoanthrachinon und 1-Amino-5-benzoylaminoanthrachinon umsetzt, wobei man das Verhältnis von 1-Aminoanthrachinon und 1-Amino-5-benzoylaminoanthrachinon zueinander nach dem gewünschten Anteil der zwei Einzelfarbstoffe in der Küpenfarbstoffmischung wählt, oder indem man 2-Phenyl-4,6-dichlortriazin zuerst mit 1-Aminoanthrachinon und 1,5-Diaminoanthrachinon umsetzt, wobei man das Verhältnis von 1-Aminoanthrachinon und 1,5-Diaminoanthrachinon zueinander nach dem gewünschten Anteil der zwei Einzelfarbstoffe in der Küpenfarbstoffmischung wählt, und das resultierte Zwischenprodukt anschliessend mit Benzoylchlorid umsetzt, oder indem man Cyanurchlorid zuerst mit 1-Aminoanthrachinon und 1-Amino-5-benzoylaminoanthrachinon umsetzt, wobei man das Verhältnis von 1-Aminoanthrachinon und 1-Amino-5-benzoylaminoanthrachinon zueinander nach dem gewünschten Anteil der zwei Einzelfarbstoffe in der Küpenfarbstoffmischung wählt, und das resultierte Zwischenprodukt anschliessend mit Morpholin umsetzt.

Die Herstellung der erfindungsgemässen Küpenfarbstoffmischungen wird vorteilhafterweise in organischen Lösungsmitteln wie z.B. höher siedenden aliphatischen Kohlenwasserstoffen, N,N-Dimethylacetamid, N-Methyl-2-pyrrolidon, 1,3-Dimethyl-2-imidazolidinon, Tetramethylharnstoff, Dimethylformamid, Xylol, Phenol, Trichlorbenzol, Nitrobenzol oder Benzoesäuremethylester durchgeführt.

Bevorzugtes Lösungsmittel ist Nitrobenzol.

Als cellulosehaltige Fasermaterialien kommt insbesondere unvorbehandelte Cellulose in Betracht, wie z.B. Hanf, Leinen, Jute, native Baumwolle, sowie Fasermischungen z.B. solche aus Polyacrylnitril/Baumwolle oder Polyester/Baumwolle, ferner sind auch Fasermaterialien auf Basis regenerierter Cellulose (Viskose) geeignet. Das Cellulosematerial kann dabei in den verschiedensten Verarbeitungsformen vorliegen, z.B. als loses Material, Garn, Gewebe, Vlies oder Gewirke.

Die Menge der der Färbeflotte zugesetzten Küpenfarbstoffmischung richtet sich nach der gewünschten Farbstärke. Im allgemeinen haben sich Mengen von 0,001 bis 10, vorzugsweise 0,01 bis 3 Gewichtsprozent, bezogen auf das Gewicht des eingesetzten cellulosehaltigen Fasermateriales, bewährt.

Die Färbeflotten enthalten neben einer der erfindungsgemässen Küpenfarbstoffmischungen die für die Küpenfärberei üblichen Hilfschemikalien. Dabei kommen z.B. Alkali wie Natriumcarbonat, Kaliumhydroxid, Natriumhydroxid oder Alkalispender wie z.B. Natriumchloracetat in Betracht. Vorzugsweise kommt Natriumhydroxid in Betracht. Ferner sind die Reduktionsmittel zu erwähnen, wobei vorzugsweise Hydrosulfit verwendet wird.

Zusätzlich kann die Färbeflotte noch weitere übliche Färbereihilfsprodukte enthalten, wie z.B. Elektrolyte wie Natriumchlorid oder Natriumsulfat oder handelsübliche Netz-, Egalisier- und Dispergiermittel.

Die erfindungsgemässen Küpenfarbstoffmischungen können aus einer wässrigen Lösung nach den in der Küpenfärberei üblichen Foulard- oder Ausziehverfahren appliziert werden. Das Ausziehverfahren ist bevorzugt. Das Flottenverhältnis ist von den apparativen Gegebenheiten, vom Substrat und der Aufmachungsform abhängig. Es kann jedoch innerhalb eines weiten Bereiches gewählt werden, z.B. 1:4 bis 1:100, liegt aber vorzugsweise zwischen 1:6 bis 1:20.

Das Färbeverfahren kann bei Temperaturen von 20 bis 110°C durchgeführt werden. Vorzugsweise liegt die Temperatur zwischen 30 und 100°C, insbesondere zwischen 30 und 80°C.

Im Anschluss an das Färben wird das gefärbte Cellulosematerial in üblicher Weise geseift. Man behandelt dazu das Substrat bei Kochtemperatur in einer Lösung, die Seife oder synthetisches Waschmittel und gegebenenfalls Natriumcarbonat enthält.

Mit den erfindungsgemässen Küpenfarbstoffmischungen erhält man gleichmässige und farbkräftige gelbe Ausfärbungen, die sich durch gute Färbeausbeuten sowie gute Licht- und Nassechtheiten auszeichnen.

Die nachfolgenden Beispiele dienen der Veranschaulichung der Erfindung. Darin sind die Teile Gewichtsteile und die Prozente Gewichtsprozente. Die Temperaturen sind in Celsiusgraden angegeben. Die Beziehung zwischen Gewichtsteilen und Volumenteilen ist dieselbe wie diejenige zwischen Gramm und Kubikzentimeter.

### Beispiel 1:

In einem 2 l Reaktionsgefäss werden unter einer Stickstoffatmosphäre
40,3 g 2-Phenyl-4,6-dichlortriazin à 98,2%,
29,7 g 1-Aminoanthrachinon à 98,6%,
82,6 g 1-Amino-5-benzoylaminoanthrachinon à 90,6% und
1050 ml Nitrobenzol vorgelegt, auf eine Temperatur von 100-105° C aufgeheizt und 6 Stunden gerührt.
Anschliessend wird die Reaktionsmasse, welche über eine dunkle Lösung in eine orange Suspension übergeht, auf 140-145° C aufgeheizt und 15 Stunden bei dieser Temperatur nachgerührt.
Die gebildete orangenrote Suspension wird dann auf Raumtemperatur abgekühlt und filtriert. Der Niederschlag wird zuerst mit Nitrobenzol so lange gewaschen bis ein helles Filtrat resultiert und anschliessend mit Ethylalkohol so lange gewaschen bis das Filtrat nitrobenzolfrei und wasserklar wird.
Danach wird der Niederschlag mit Wasser bis zum neutralen pH-Wert gewaschen und getrocknet.
Man erhält 138,7 g eines Kondensationsproduktes, welches ca. 75% des Farbstoffes der Formel (2), und ca. 25% des Farbstoffes der Formel (3) enthält.

### Beispiel 2:

In einem 3 l Reaktionsgefäss werden unter einer Stickstoffatmosphäre
55,4 g Cyanurchlorid,
95,1 g 1-Aminoanthrachinon à 98,6%,
68,0 g 1-Amino-5-benzoylaminoanthrachinon à 90,6% in
2 000 ml Nitrobenzol suspendiert, auf eine Temperatur von 100-105° C aufgeheizt und 6 Stunden gerührt.
Anschliessend wird die Reaktionsmasse auf 140-145° C aufgeheizt und 15 Stunden bei dieser Temperatur nachgerührt. Danach werden
149,8 g Morpholin zugegeben und die Reaktionsmasse weitere 8 Stunden bei 140-145° C nachgerührt.
Die resultierte orange Suspension wird dann auf Raumtemperatur abgekühlt und filtriert. Der Niederschlag wird zuerst mit Nitrobenzol so lange gewaschen bis ein helles Filtrat resultiert und anschliessend mit Ethylalkohol so lange gewaschen bis das Filtrat nitrobenzolfrei und wasserklar wird.
Danach wird der Niederschlag mit Wasser bis zum neutralen pH-Wert gewaschen und getrocknet.
Man erhält 191,1 g eines Kondensationsproduktes, welches ca. 60% des Farbstoffes der Formel (4), und ca. 40% des Farbstoffes der Formel (5) enthält.

### Beispiel 3:

In einem 750 ml Reaktionsgefäss werden unter einer Stickstoffatmosphäre
34,50 g 2-Phenyl-4,6-dichlortriazin à 98,2% und
27,15 g 1-Aminoanthrachinon à 98,6% in
600 ml Nitrobenzol vorgelegt, auf eine Temperatur von 100-105° C aufgeheizt und 3 Stunden gerührt (Reaktionsmasse A).
In einem 1,5 l Reaktionsgefäss werden inzwischen unter einer Stickstoffatmosphäre 42,48 g 1,5-Diaminoanthrachinon à 96,9% in
500 ml Nitrobenzol vorgelegt und auf eine Temperatur von 140-145° C aufgeheizt (Reaktionsmasse B).
Nun wird die Reaktionsmasse A innerhalb 1 Stunde zur Reaktionsmasse B zudosiert, wobei die Reaktionstemperatur im 1,5 l Reaktionsgefäss bei 140-145° C gehalten wird.
Anschliessend wird das 750 ml Reaktionsgefäss mit
50 ml Nitrobenzol nachgespült.
Die vereinten Reaktionsmassen A und B werden nun in dem 1,5 l Reaktionsgefäss unter einer Stickstoffatmosphäre 6 Stunden bei 140-142° C gehalten. Danach werden 30,30 g Benzoylchlorid zugegeben und der Reaktorinhalt 15 Stunden bei 140-142° C unter einer Stickstoffatmosphäre nachgerührt.
Die gebildete orangenrote Suspension wird dann auf Raumtemperatur abgekühlt und filtriert. Der Niederschlag wird zuerst mit Nitrobenzol so lange gewaschen bis ein helles Filtrat resultiert und anschliessend mit Ethylalkohol so lange gewaschen bis das Filtrat nitrobenzolfrei und wasserklar wird.
Danach wird der Niederschlag mit Wasser bis zum neutralen pH-Wert gewaschen und getrocknet.
Man erhält 102,50 g eines Kondensationsproduktes, welches ca. 80% des Farbstoffes der Formel (2), und ca. 20% des Farbstoffes der Formel (3) enthält.

### Beispiel 4:

Ein Stück von 10 g Baumwolltricot wird 10 Minuten in ca. 70-80° C heissem Wasser vorbenetzt und anschliessend mittels einer Laborschleuderapparatur auf einen Feuchtgehalt von ca. 60 Gew.-%, gerechnet auf das Gewicht des Baumwolltricots eingestellt. Das so vorbereitete Baumwolltricot wird in einer Ahiba®-Laborfärbeapparatur bei 30° C und einem Flottenverhältnis von 1:10 mit einer Flotte, enthaltend
0,25 g einer Küpenfarbstoffmischung bestehend aus:
0,175 g des Küpenfarbstoffes der Formel (2), und
0,075 g des Küpenfarbstoffes der Formel (3),
2 g/l eines handelsüblichen Egalisiermittels,
12 ml/l einer 30%-iger Natriumhydroxydlösung,
4 g/l Natriumhydrosulfit, und
14 g/l Natriumchlorid
behandelt.
Nach Zugabe des Baumwolltricots wird die Temperatur der Flotte innerhalb von 15 Minuten auf 50° C erhöht und 45 Minuten gehalten. Danach wird das Baumwolltricot dem Färbebad entnommen, mit Wasser gespült und 20 Minuten bei 50° C mit einer wässrigen Lösung, enthaltend 5 ml/l 30%-iges H₂O₂ oxidiert.
Anschliessend wird das Baumwolltricot mit Wasser gespült und 20 Minuten bei 90 bis 100° C mit einer wässrigen Lösung enthaltend 1 g/l eines handelsüblichen Wasch- und Netzmittels und 1 g/l Soda kalz. geseift.
Danach wird das Baumwolltricot mit heissem und kaltem Wasser gespült und getrocknet. Man erhält eine goldorange Färbung mit sehr guten Licht- und Waschechteiten.

## Patentansprüche

1. Küpenfarbstoffmischung enthaltend mindestens zwei strukturell unterschiedliche Farbstoffe, die jeweils der Formel 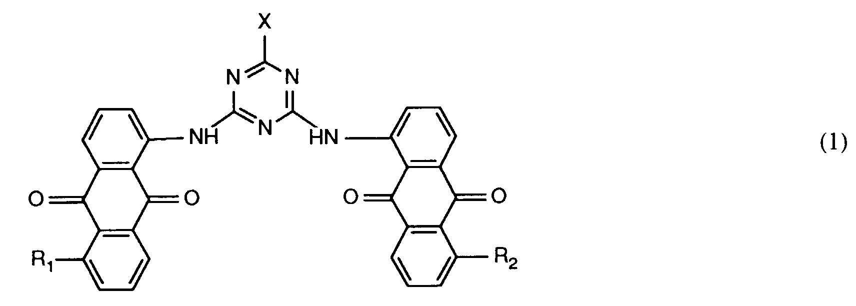 entsprechen, worin
X unsubstituiertes oder durch C₁-C₄-Alkyl, C₁-C₄-Alkoxy oder Halogen substituiertes Phenyl, Morpholino, oder der Rest -SR₃ ist,
R₁ und R₂ unabhängig voneinander je Wasserstoff oder der Rest -NHCO-C₆H₅ sind, und
R₃ C₁-C₄-Alkyl oder unsubstituiertes oder durch C₁-C₄-Alkyl oder Halogen substituiertes Phenyl ist.

2. Küpenfarbstoffmischung gemäss Anspruch 1 enthaltend einen Farbstoff der Formel (1), worin X unsubstituiertes oder durch C₁-C₄-Alkyl, C₁-C₄-Alkoxy oder Halogen substituiertes Phenyl; R₁ Wasserstoff und R₂ der Rest -NHCO-C₆H₅ sind, und einen Farbstoff der Formel (1), worin X unsubstituiertes oder durch C₁-C₄-Alkyl, C₁-C₄-Alkoxy oder Halogen substituiertes Phenyl; und R₁ und R₂ der Rest -NHCO-C₆H₅ sind.

3. Küpenfarbstoffmischung gemäss Anspruch 2 enthaltend den Farbstoff der Formel 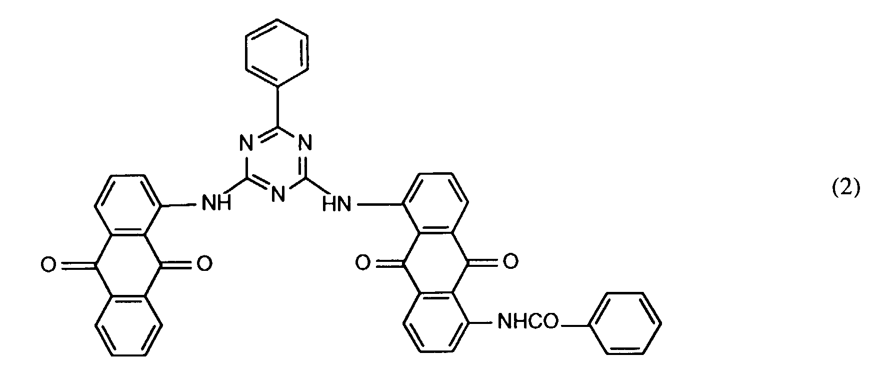 und den Farbstoff der Formel

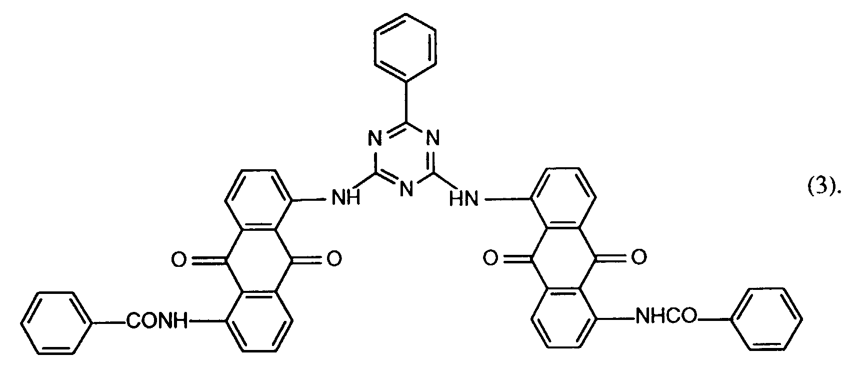

4. Küpenfarbstoffmischung gemäss Anspruch 1 enthaltend den Farbstoff der Formel 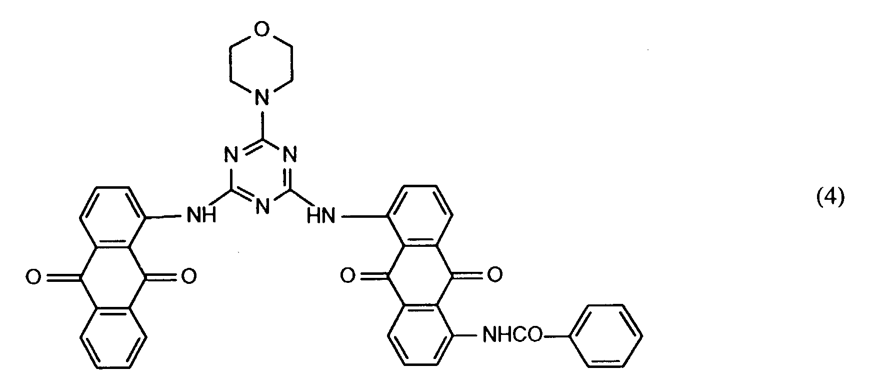 und den Farbstoff der Formel

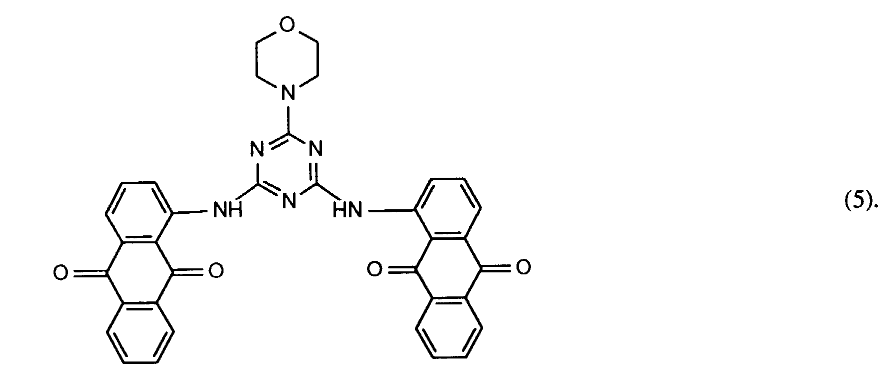

5. Küpenfarbstoffmischung gemäss Anspruch 3 enthaltend 10 bis 90 Gew.-% des Küpenfarbstoffes der Formel (2) und 90 bis 10 Gew.-% des Küpenfarbstoffes der Formel (3).

6. Küpenfarbstoffmischung gemäss Anspruch 4 enthaltend 10 bis 90 Gew.-% des Küpenfarbstoffes der Formel (4) und 90 bis 10 Gew.-% des Küpenfarbstoffes der Formel (5).

7. Küpenfarbstoffmischung gemäss Anspruch 5 enthaltend 70 Gew.-% des Küpenfarbstoffes der Formel (2) und 30 Gew.-% des Küpenfarbstoffes der Formel (3).

8. Küpenfarbstoffmischung gemäss Anspruch 6 enthaltend 60 Gew.-% des Küpenfarbstoffes der Formel (4) und 40 Gew.-% des Küpenfarbstoffes der Formel (5).

9. Verfahren zur Herstellung einer Küpenfarbstoffmischung gemäss Anspruch 3, dadurch gekennzeichnet, dass man 2-Phenyl-4,6-dichlortriazin mit 1-Aminoanthrachinon und 1-Amino-5-benzoylaminoanthrachinon umsetzt, wobei man das Verhältnis von 1-Aminoanthrachinon und 1-Amino-5-benzoylaminoanthrachinon zueinander nach dem gewünschten Anteil der zwei Einzelfarbstoffe in der Küpenfarbstoffmischung wählt.

10. Verfahren zur Herstellung einer Küpenfarbstoffmischung gemäss Anspruch 3, dadurch gekennzeichnet, dass man 2-Phenyl-4,6-dichlortriazin zuerst mit 1-Aminoanthrachinon und 1,5-Diaminoanthrachinon umsetzt, wobei man das Verhältnis von 1-Aminoanthrachinon und 1,5-Diaminoanthrachinon zueinander nach dem gewünschten Anteil der zwei Einzelfarbstoffe in der Küpenfarbstoffmischung wählt, und das resultierte Zwischenprodukt anschliessend mit Benzoylchlorid umsetzt.

11. Verfahren zur Herstellung einer Küpenfarbstoffmischung gemäss Anspruch 4, dadurch gekennzeichnet, dass man Cyanurchlorid zuerst mit 1-Aminoanthrachinon und 1-Amino-5-benzoylarninoanthrachinon umsetzt, wobei man das Verhältnis von 1-Aminoanthrachinon und 1-Amino-5-benzoylaminoanthrachinon zueinander nach dem gewünschten Anteil der zwei Einzelfarbstoffe in der Küpenfarbstoffmischung wählt, und das resultierte Zwischenprodukt anschliessend mit Morpholin umsetzt.

12. Verwendung der Küpenfarbstoffmischung gemäss Anspruch 1 zum Färben von cellulosehaltigen Fasermaterialien.

13. Verwendung gemäss Anspruch 12, dadurch gekennzeichnet, dass man als cellulosehaltige Fasermaterialien Baumwolle, Polyacrylnitril/Baumwolle- und Polyester/Baumwolle-Mischfaser, sowie Viskose verwendet.

14. Verwendung gemäss Anspruch 13, dadurch gekennzeichnet, dass man Baumwolle verwendet.
